# EUROPÄISCHE PATENTSCHRIFT

(11) **EP 1 229 210 B1**
(45) Veröffentlichungstag und Bekanntmachung des Hinweises auf die Patenterteilung: **29.03.2006**
(21) Anmeldenummer: 01811018.9
(22) Anmeldetag: 17.10.2001
(51) Int. Cl.: E21B 10/44, B23B 51/02

(54) **Wendelbohrer**
Twist drill
Foret hélicoidal

(30) Priorität: 27.10.2000 DE 10053342
(43) Veröffentlichungstag der Anmeldung: 07.08.2002
(73) Patentinhaber: HILTI Aktiengesellschaft, 9494 Schaan (LI)
(72) Erfinder: Kleine, Werner, 28832 Achim (DE); Bongers-Ambrosius, Hans-Werner, 81477 München (DE)
(74) Vertreter: Wildi, Roland

(56) Entgegenhaltungen:
- EP-A- 0 126 409
- EP-A- 1 138 871
- WO-A-99/29998
- US-A- 4 883 135

## Beschreibung

Die Erfindung bezeichnet einen Wendelbohrer, welcher als Bohrwerkzeug in ein drehendes und optional schlagendes Werkzeuggerät eingesetzt wird, vorteilhaft ausgebildet für den schlagend abrasiven Abtrag von Gestein oder gesteinähnlichem Material, wie Beton.

Wendelbohrer mit einem innerhalb des Schafts zwischen einem Einsteckende und einem Werkzeugkopf wendelförmig ausgebildeten Wendel zum durch die Drehung des Wendelbohrers vermitteltem Abtransport des abrasiv abgetragenen Materials sind üblich. Der Wendel weist meist mehrere Wendelgänge mit den zugeordneten Wendelnuten auf, in welchen entlang das am Werkzeugkopf abrasiv abgetragene Material abtransportiert wird.

Bei Wendelbohrern grösseren Durchmessers und leistungsfähigen Werkzeuggeräten werden die wendelförmigen Bohrmehlnuten zur Erhöhung der Dauerwechselfestigkeit des Schafts durch eine im Nutengrund angeordnete wendelförmig umlaufende Nutverstärkungsrippe verstärkt.

Nach der DE19753731A1 weist ein Wendelbohrer für Gestein innerhalb der zwischen den Wendelgängen ausgebildeten Wendelnuten jeweils eine oder mehrere, gleichmässig längs der Wendelnut verlaufende, Nutverstärkungsrippen auf, welche durch eine geringere radiale Rippenhöhe als die Wendelganghöhe Bestandteil der Wendelnut sind. Die axiale Rippenbreite ist geringer als die Rückenbreite der Wendelgänge oder spitz auslaufend.

Durch die innerhalb der Wendelnut angeordnete Nutverstärkungsrippe kommt es oftmals zu Verklumpungen des, oft feuchten, abrasiv abgetragenen Materials und in dessen Folge zu einem Verstopfen der Nut, bis es schliesslich zu einem Klemmen des Bohrwerkzeugs oder einem schlagartigen Entweichen des verstopfenden Materials kommt.

Die US-4883135 und die WO - 9929998 offenbaren einen Wendelbohrer für Gestein mit einem, zwischen einem Einsteckende und einem Werkzeugkopf angeordneten, Schaft mit zumindest einer wendelförmig umlaufenden Wendelnut , mit einer im radialen Nutengrund angeordneten radialen Nutverstärkung , wobei die Position innerhalb der Wendelnut und / oder die geometrische Form der Nutverstärkung längs der umlaufenden Wendelnut variiert ist.

Nach der nachveröffentlichten EP1138871 weist ein Wendelbohrer in der Wendelnut eine Vielzahl von Noppen auf, welche zur Verhinderung von Verklumpungen teilweise in den Nutquerschnitt hineinragen und radial nach Aussen gerichtet sind.

Die EP-0126405 offenbart einen Wendelbohrer bei dem sich die Bohrmehlnut in Richtung des Einspannendes Vergrößert.

Die Aufgabe der Erfindung besteht unter Vermeidung obiger Nachteile in der Realisierung eines dauerwechselfesten Wendelbohrers grösseren Durchmessers, der einer Verklumpung des abrasiv abgetragenen Materials in der Nut entgegenwirkt.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein Wendelbohrer für Gestein mit einem Schaft zwischen einem Einsteckende und einem Werkzeugkopf mit Schneiden aus Hartstoff zwischen zumindest einem Wendelgang zumindest eine wendelförmig umlaufende Wendelnut mit radialen Nutverstärkungen im Nutengrund auf, welche längs der umlaufenden Wendelnut ihre geometrische Form und/oder ihre Position innerhalb der Wendelnut, vorteilhaft periodisch, ändert.

Somit ändert sich, ohne Verminderung der Dauerwechselfestigkeit des Schafts, bezüglich des längs der Wendelnuten geförderten Materials die geometrische Form bzw. Position der, ein Strömungshindemis ausbildenden, Nutverstärkung. Durch diese Modulierung der Nutverstärkung des Nutengrundes kommt es in Verbindung mit einem bestimmten Bohrlochdurchmesser längs der Wendelnuten zu einer periodischen Änderung von lokal durchströmbaren Nutenquerschnittsflächenbereichen, welche dem Transport des abrasiv abgetragenen Materials zur Verfügung stehen. Somit wird das innerhalb längs der Wendelnut abtransportierte Material, welches näherungsweise einem konstanten Förderdruck unterliegt, zusätzlich mit lokalen periodischen Druckschwankungen moduliert, welche durch die angeregten Ausgleichsströmungen einem Verklumpen oder Ansetzen an der Oberfläche der Wendelnuten entgegenwirken.

Vorteilhaft ist die Nutverstärkung als durchgängige Verstärkungsrippe ausgebildet, welche bezüglich ihrer geometrischen Form in der Rippenhöhe und/oder der Rippenbreite längs der umlaufenden Wendelnut variiert. Die durchgängige Ausführung der Nutverstärkungen vergrössert die für die Schlagdurchleitung nutzbare axiale Querschnittsfläche.

Vorteilhaft nimmt der längs der umlaufenden Wendelnut strömungshindernde Rippenquerschnitt der Verstärkungsrippe in Richtung zum Einspannende ab, wodurch der verfügbare Förderquerschnitt der Wendelnut zunimmt. Dadurch kann das längs der umlaufenden Wendelnut verlangsamte Material in grösserer Menge gefördert werden und wirkt somit einem Verklumpen oder Ansetzen an der Oberfläche der Wendelnuten entgegen.

Vorteilhaft nimmt die Rippenhöhe der Verstärkungsrippe in Richtung zum Einspannende zu und erstreckt sich weiter vorteilhaft teilweise bis zur Hüllfläche des Wendels, wodurch die Führung an der Bohrlochwandung verbessert wird.

Vorteilhaft variiert die Nutverstärkung ihrer Lage in der Wendelnut durch einen von dem Wendelsteigungswinkel geringfügig abweichenden Rippensteigungswinkel. Eine derartige Lageänderung fördert insbesondere die Ausgleichsströmungen, welche einem Verklumpen oder Ansetzen an der Oberfläche der Wendelnuten entgegenwirken.

Vorteilhaft ist in einer alternativen Variante die Nutverstärkung als unterbrochene Verstärkungsrippe ausgebildet, deren Abschnitte weiter vorteilhaft längs der umlaufenden Wendelnut alternierend schaufelartig gekrümmt sind. Durch die wechselnde Aufteilung und Zusammenführung des geförderten Materials durch die schaufelartigen Abschnitte der unterbrochenen Verstärkungsrippe wird eine besonders gute Verteilung des Materials innerhalb der Wendelnuten erzielt und somit einem Verklumpen oder Ansetzen an der Oberfläche der Wendelnuten entgegengewirkt.

Die Erfindung wird bezüglich eines vorteilhaften Ausführungsbeispiels näher erläutert mit:
Fig. 1 als Wendelbohrer mit Verstärkungsrippe
Fig. 1A, 1B, 1C zeigen Detailschnitte gemäss den Linien A-A, B-B, C-C in Fig. 1
Fig. 2 als Wendelausschnitt mit schaufelartiger Verstärkung

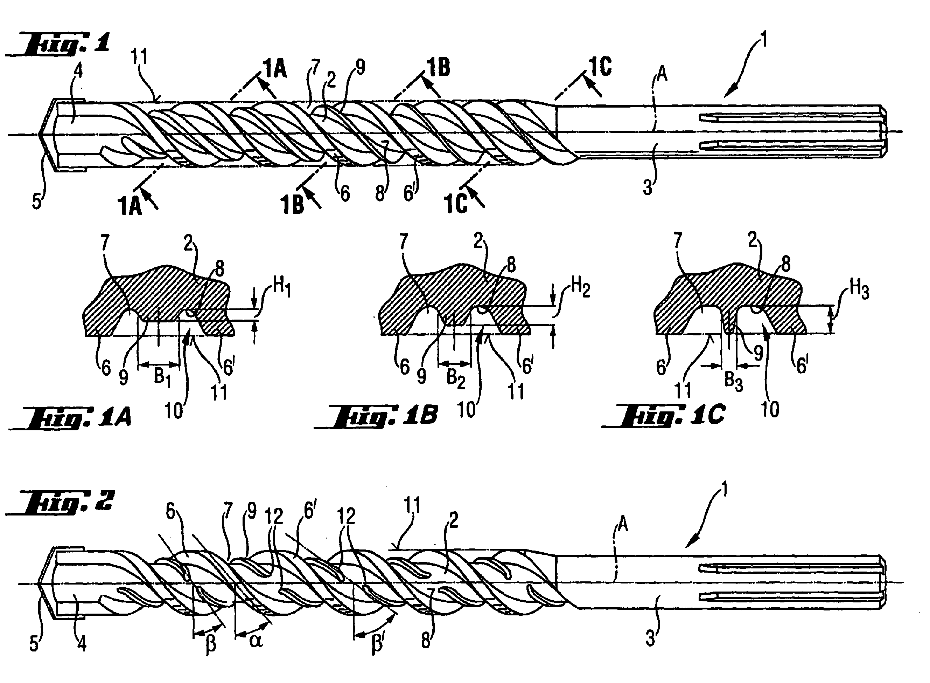

Nach Fig. 1 weist ein Wendelbohrer 1 für Gestein mit einem Schaft 2 zwischen einem Einsteckende 3 und einem Werkzeugkopf 4 mit Schneiden 5 aus Hartstoff zwischen zwei Wendelgängen 6, 6' eine, eine Drehachse A wendelförmig umlaufende, Wendelnut 7 auf, welche im radialen Nutengrund 8 eine radial vorstehende, als durchgängige Verstärkungsrippe ausgebildete, Nutverstärkung 9 aufweist, welche längs der umlaufenden Wendelnut 7 mit i=1..3 in Richtung zum Einsteckende 3 ihre geometrische Form zur Erzielung eines grösseren Förderquerschnitts 10 der Wendelnut 7 variiert, indem die Rippenbreite Bᵢ schneller abnimmt als die Rippenhöhe Hᵢ zunimmt, die bis zur Hüllfläche 11 des Wendels reicht.

Nach Fig. 2 wird bei einer als unterbrochene Verstärkungsrippe, mit alternierend schaufelförmig gekrümmt ausgebildeten Abschnitten 12 ausgebildeten, Nutverstärkung 9 die Lage in der Wendelnut 7 durch einen von dem Wendelsteigungswinkel α geringfügig abweichenden Rippensteigungswinkel β, β' variiert.

## Patentansprüche

1. Wendelbohrer für Gestein mit einem, zwischen einem Einsteckende (3) und einem Werkzeugkopf (4) angeordneten, Schaft (2) mit zumindest einer wendelförmig umlaufenden Wendelnut (7), mit einer im radialen Nutengrund (8) angeordneten radialen Nutverstärkung (9), wobei die Position innerhalb der Wendelnut (7) und/oder die geometrische Form der Nutverstärkung (9) längs der umlaufenden Wendelnut (7) variiert ist,
wobei längs der umlaufenden Wendelnut (7) die geometrische Form der Nutverstärkung (9) durch eine Rippenhöhe (H) und/oder eine Rippenbreite (B) variiert ist, **dadurch gekennzeichnet, dass** sich die Rippenhöhe (H) zumindest teilweise bis zur Hüllfläche (11) des Wendels erstreckt, und dass in Richtung zum Einspannende (3) der Nutverstärkungsquerschitt abnimmt.

2. Wendelbohrer nach Anspruch 1, **dadurch gekennzeichnet, dass** die Nutverstärkung (9) als durchgängige Verstärkungsrippe ausgebildet ist.

3. Wendelbohrer nach Anspruch 1, **dadurch gekennzeichnet, dass** die Rippenhöhe (H) in Richtung zum Einspannende (3) zunimmt.

4. Wendelbohrer nach einem der vorherigen Ansprüche, **dadurch gekennzeichnet, dass** die Nutverstärkung (9) ihre Lage in der Wendelnut (7) durch einen von dem Wendelsteigungswinkel (α) geringfügig abweichenden Rippensteigungswinkel (β) variiert.

5. Wendelbohrer nach einem der vorherigen Ansprüche, **dadurch gekennzeichnet, dass** die Nutverstärkung (9) als unterbrochene Verstärkungsrippe ausgebildet ist.

6. Wendelbohrer nach Anspruch 5, **dadurch gekennzeichnet, dass** die als unterbrochene Verstärkungsrippe ausgebildete Nutverstärkung (9) schaufelartig gekrümmte Abschnitte (12) ausbildet.

7. Wendelbohrer nach Anspruch 6, **dadurch gekennzeichnet, dass** die Abschnitte (12) längs der umlaufenden Wendelnut (7) alternierend gekrümmt sind.

## Claims

1. Twist drill for stone with a shaft (2), disposed between an insertion end (3) and a tool head (4), with at least one rotary helical groove (7) with a radial reinforcement (9) disposed in the radial base (8), whereby the position within the helical groove (7) and/or the geometrical form of the groove reinforcement (9) is varied along the rotary helical groove (7), whereby the geometrical form of the groove-reinforcement is varied, along the rotary helical groove (7) by means of the height of a rib (H) and the breadth of a rib (B), **characterized in that** the height of the rib extends at least partially towards the surface (11) of the helix.

2. Twist drill in accordance with claim 1, **characterized in that** the groove reinforcement (9) is developed as a uniform reinforcement rib.

3. Twist drill in accordance with claim 1, **characterized in that** the height of the rib (H) decreases in the direction of the chucking end (3).

4. Twist drill in accordance with one of the preceding claims, **characterized in that** the groove reinforcement (9) varies its position in the helical groove (7) by means of a rib pitch angle (β) that varies slightly from the helical pitch angle (α).

5. Twist drill in accordance with one of the preceding claims, **characterized in that** the groove reinforcement (9) is developed as an uninterrupted reinforcement rib.

6. Twist drill in accordance with claim 5, **characterized in that** the groove reinforcement (9), developed as an uninterrupted reinforcement rib, forms blade-like arched sections (12).

7. Twist drill in accordance with claim 6, **characterized in that** the sections (12) are alternately arched along the rotary, helical groove (7).

## Revendications

1. Foret hélicoïdal pour roche, avec une tige (2) qui est située entre une extrémité insérable (3) et une tête d'outil (4) et qui est pourvue d'au moins une rainure hélicoïdale tournant hélicoïdalement (7) comportant un renfort de rainure radial (9) disposé dans le fond de rainure radial (8), la position à l'intérieur de la rainure hélicoïdale (7) et/ou la forme géométrique du renfort de rainure (9) variant le long de la rainure hélicoïdale tournante (7), la forme géométrique du renfort de rainure (9) variant le long de la rainure hélicoïdale tournante (7) du fait de la hauteur de nervure (H) et/ou de la largeur de nervure (B), **caractérisé en ce que** la hauteur de nervure (H) s'étend au moins partiellement jusqu'à la surface enveloppante (11) de l'hélice, et **en ce que** la section transversale du renfort de rainure diminue en direction de l'extrémité insérable (3).

2. Foret hélicoïdal selon la revendication 1, **caractérisé en ce que** le renfort de rainure (9) est conformé en nervure de renfort continue.

3. Foret hélicoïdal selon la revendication 1, **caractérisé en ce que** la hauteur de nervure (H) augmente en direction de l'extrémité insérable (3).

4. Foret hélicoïdal selon une des revendications précédentes, **caractérisé en ce que** la position du renfort de rainure (9) dans la rainure hélicoïdale (7) varie du fait d'un angle de pas de nervure (β) légèrement différent de l'angle de pas d'hélice (α).

5. Foret hélicoïdal selon une des revendications précédentes, **caractérisé en ce que** le renfort de rainure (9) est conformé en nervure de renfort interrompue.

6. Foret hélicoïdal selon la revendication 5, **caractérisé en ce que** le renfort de rainure (9) conformé en nervure de renfort interrompue forme des portions arquées en forme de pelles (12).

7. Foret hélicoïdal selon la revendication 6, **caractérisé en ce que** les portions (12) sont arquées de manière alternée le long de la rainure hélicoïdale tournante (7).
